(19) Europäisches Patentamt / European Patent Office / Office européen des brevets

(11) **EP 4 309 917 B1**

(12) **EUROPEAN PATENT SPECIFICATION**

(45) Date of publication and mention
of the grant of the patent:
**08.10.2025  Bulletin 2025/41**

(21) Application number: **23182471.5**

(22) Date of filing: **29.06.2023**

(51) International Patent Classification (IPC):
**B60C 1/00** *(2006.01)*   **B60C 3/04** *(2006.01)*
**B60C 9/28** *(2006.01)*   **B60C 11/03** *(2006.01)*

(52) Cooperative Patent Classification (CPC):
**B60C 1/0016; B60C 3/04; B60C 9/28;
B60C 11/032;** B60C 2011/0025

(54) **TIRE**

REIFEN

PNEUMATIQUE

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority:  **22.07.2022  JP 2022117374**

(43) Date of publication of application:
**24.01.2024  Bulletin 2024/04**

(73) Proprietor: **Sumitomo Rubber Industries, Ltd.
Kobe-shi, Hyogo 651-0072 (JP)**

(72) Inventor: **TANAKA, Tatsuhiro
Kobe-shi, Hyogo, 651-0072 (JP)**

(74) Representative: **Manitz Finsterwald
Patent- und Rechtsanwaltspartnerschaft mbB
Martin-Greif-Straße 1
80336 München (DE)**

(56) References cited:
**EP-A1- 3 915 806      US-A- 5 343 919
US-A1- 2012 214 933      US-A1- 2012 318 425
US-A1- 2018 244 104      US-A1- 2019 375 237**

**Description**

TECHNICAL FIELD

The present invention relates to a tire.

BACKGROUND OF THE INVENTION

In recent years, there has been an increasing demand for fuel efficiency of an automobile. In order to cope with fuel efficiency of an automobile, a tire has also been required to have fuel efficiency due to reduction of rolling resistance. Moreover, it has also been required to improve an overall performance of fuel efficiency and various performances of a tire.
Here, for example, WO 2015/079703 describes that a natural rubber is used as a rubber component for a rubber composition for tread, and by compounding resin and a softening agent in a larger amount than before, braking performance of a tire has been improved while suppressing an increase in rolling resistance. EP 3 915 806 A1 discloses a pneumatic tire wherein the rubber composition of the tread comprises styrene-butadiene rubber and, when A (mm) is a total width of the tire and B (mm) is a breaker width of the tire, a value of Y = (B-16) / A may be 0.75 or less. US 2012/0214933 A1 discloses rubber compositions for tire treads comprising a styrene-butadiene rubber and a saturated thermoplastic styrene elastomer. US 2012/318425 A1 discloses a tire comprising a radially outer elastomer layer intended to come into contact with the road, a belt, and a radially inner elastomer layer (sublayer) placed between the radially outer layer and the belt, the sublayer having a formulation different from that of the radially outer elastomer layer, wherein the sublayer comprises a rubber composition comprising butadiene rubber, natural rubber, and a thermoplastic styrene (TPS) elastomer.

SUMMARY OF THE INVENTION

With recent development of expressways and improvement of vehicle performance, it is not uncommon to travel a long distance at a high speed. Under such circumstances, in a rubber composition and a tire as described above, turning performance during high-speed running has not been taken into consideration.
It is an object of the present invention to provide a tire having improved overall performance of high-speed turning performance and fuel efficiency.
The present invention is a tire having a tread part and a belt layer,

wherein a rubber composition of the tread part comprises a rubber component and a thermoplastic elastomer,
wherein the rubber component comprises a multi-component copolymer having an aromatic vinyl unit and a conjugated diene unit,
wherein the thermoplastic elastomer comprises a styrene-based thermoplastic elastomer having an alkylene unit,
wherein, when Y is defined in the following equation with Wt, in mm, being a cross-sectional width of the tire and B, in mm, being a belt layer width of the tire under a condition that a tread of the tire in a standardized state is pressed against a flat surface by applying a standardized load,

$$Y=(B-16)/Wt,$$

Y is 0.75 or less, and
wherein a ratio (X/Y) of a total content X, in part(s) by mass, of the thermoplastic elastomer based on 100 parts by mass of the rubber component to Y is 3.0 or more,
wherein the tread part comprises a base rubber layer adjacent to an outer side of a belt layer in a tire radial direction, the base rubber layer being formed of a rubber composition comprising a rubber component which comprises at least one of an isoprene-based rubber and a butadiene rubber.

According to the present invention, provided is a tire having improved overall performance of high-speed turning performance and fuel efficiency.

BRIEF DESCRIPTION OF THE DRAWINGS

FIG. 1 is a schematic partial cross-sectional view of a tire according to one embodiment of the present invention.

FIG. 2 is a developed view of a tread pattern on a tread surface.

DETAILED DESCRIPTION

The tire according to the present invention is a tire having a tread part and a belt layer, wherein a rubber composition of the tread part comprises a rubber component and a thermoplastic elastomer, wherein the rubber component comprises a multi-component copolymer having an aromatic vinyl unit and a conjugated diene unit, wherein the thermoplastic elastomer comprises a styrene-based thermoplastic elastomer having an alkylene unit, wherein, when Y is defined in the following equation with Wt, in mm, being a cross-sectional width of the tire and B, in mm, being a belt layer width of the tire under a condition that a tread of the tire in a standardized state is pressed against a flat surface by applying a standardized load, Y=(B-16)/Wt, Y is 0.75 or less, and wherein a ratio (X/Y) of a total content X, in part(s) by mass, of the thermoplastic elastomer based on 100 parts by mass of the rubber component to Y is 3.0 or more, wherein the tread part comprises a base rubber layer adjacent to an outer side of a belt layer in a tire radial direction, the base rubber layer being formed of a rubber composition comprising a rubber component which comprises at least one of an isoprene-based rubber and a butadiene rubber. Although it not intended to be bound by theory, for example, the following can be considered as a mechanism in which effects of the present invention are exhibited.

When the rubber composition of the tread part comprises (1) a multi-component copolymer having an aromatic vinyl unit and a conjugated diene unit as a rubber component, interaction such as $\pi$-$\pi$ stacking and the like occurs between aromatic rings in the multi-component copolymer, thereby improving reinforcing property. Moreover, (2) when the rubber composition comprises a styrene-based thermoplastic elastomer having an alkylene unit, the alkylene unit prevents contact between styrene blocks and suppresses heat generation, so that a content of a filler can be decreased, and rolling resistance can be reduced. Furthermore, (3) when the tire cross-sectional width Wt, in mm, and the belt layer width B, in mm, of the tire satisfy the relational inequality: (B-16)/Wt≤0.75, a grounding pressure of a tread shoulder part can be suppressed from being excessively increased, so that the grounding pressure of the tread part can be made uniform during high-speed turning, and a force generated on the entire grounding surface can be enlarged, thereby improving followability of the tread part to a road surface, which makes the force generated on the tread part to be easily transmitted to the inside of the tire. Furthermore, (4) when the ratio of the total content of the thermoplastic elastomer to (B-16)/Wt is set to a predetermined value, the grounding pressure of the tread part increases during high-speed running, and a part of the aromatic vinyl unit crystallizes, so that a reaction force is easily obtained during turning. In addition, with cooperation of (1) to (4) described above, it is considered that a remarkable effect of improving the overall performance of high-speed turning performance and fuel efficiency of the tire is achieved.

A glass transition temperature of the styrene-based thermoplastic elastomer having the alkylene unit is preferably -30°C or lower.

When the glass transition temperature of the styrene-based thermoplastic elastomer having the alkylene unit is -30°C or lower, heat generation of the rubber composition is decreased, and rolling resistance is reduced, so that it is considered that fuel efficiency can be improved.

A styrene content of the styrene-based thermoplastic elastomer having the alkylene unit is preferably 20% by mass or more.

When the styrene content of the thermoplastic elastomer is within the above-described range, reinforcing property of the rubber composition can be improved, and the content of the filler can be decreased, so that it is considered that rolling resistance can be reduced and fuel efficiency can be improved.

It is preferable that the rubber composition further comprises silica having a $N_2SA$ of greater than 170 $m^2/g$ and less than 240 $m^2/g$ as measured by the BET method.

When the rubber composition comprises silica having a $N_2SA$ of greater than 170 $m^2/g$ and less than 240 $m^2/g$, reinforcing property of the rubber composition can be improved, and an excessive heat generation can be suppressed, so that it is considered that both high-speed turning performance and fuel efficiency can be achieved.

It is preferable that the rubber composition further comprises silica having a CTAB of greater than 160 $m^2/g$ and less than 210 $m^2/g$.

When the rubber composition comprises silica having a CTAB of greater than 160 $m^2/g$ and less than 210 $m^2/g$, reinforcing property of the rubber composition can be improved, and an excessive heat generation can be suppressed, so that it is considered that both high-speed turning performance and fuel efficiency can be achieved.

A ratio (70°C tan $\delta$/0°C tan $\delta$) of a tan $\delta$ at 70°C (70°C tan $\delta$) to a tan $\delta$ at 0°C (0°C tan $\delta$) of the rubber composition is preferably 0.05 or more and 0.80 or less.

When 70°C tan $\delta$/0°C tan $\delta$ is within the above-described range, it is considered that high-speed turning performance and fuel efficiency are further improved.

It is preferable that the rubber composition further comprises a resin component. When the rubber composition comprises a resin component, it is considered that high-speed turning performance can be improved while suppressing an increase in rolling resistance.

It is preferable that the rubber component further comprises a butadiene rubber.

When the rubber component comprises a butadiene rubber, the Tg of the rubber composition does not become too low, and a constant heat generation can be obtained even during high-speed turning, so that it is considered that both high-speed turning performance and reduction in rolling resistance can be achieved at a high level.

The tread part comprises a base rubber layer adjacent to an outer side of a belt layer in a tire radial direction, the base rubber layer being formed of a rubber composition comprising a rubber component which comprises at least one of an isoprene-based rubber and a butadiene rubber. When the tread part comprises a rubber composition having two or more layers, it is considered that high-speed turning performance and fuel efficiency are further improved.

When a tire outer diameter is defined as Dt, in mm, it is preferable that Wt and Dt satisfy the following inequality (1):

$$(\pi/4) \times (Dt^2/Wt) \geqq 1500 \cdots (1)$$

When the value of the above-described inequality (1) is within the above-described range and a width of the tread part with respect to a lateral area of the tire is reduced, heat generation derived from the tread part can be reduced. As a result, in the tire, a temperature rise due to the heat generation of the tread part which contributes most to heat generation can be suppressed, temperatures of the tire and of a side part can be prevented from becoming too high, so that it is considered that rolling resistance can be reduced.

The tread part has land parts partitioned by one or more circumferential grooves extending continuously in a tire circumferential direction, at least one of the land parts preferably having one or more small holes whose opening area to a tread surface is 0.1 to 15 mm$^2$.

With the tread part has one or more small holes, water between the tread surface and the road surface can be removed when the tire grounds a wet road surface, and followability to the road surface becomes easy to be obtained, so that it is considered that turning performance particularly during high-speed running is improved.

<Definition>

The "thermoplastic elastomer (TPE)" is a polymer compound having elasticity, and means a thermoplastic resin material consisting of a copolymer which has a polymer forming a crystalline hard segment having a high melting point and a polymer forming an amorphous soft segment having a low glass transition temperature. In the thermoplastic elastomer, the crystalline hard segment having a high melting point behaves as a pseudo cross-linking point and expresses elasticity. In the thermoplastic elastomer (TPE), the pseudo cross-linking point can be regenerated by heating the hard segment to melt it once and then cooling it, and therefore it can be reused. On the other hand, a rubber has a double bond or the like in a molecular chain and generates a three-dimensional network structure and expresses elasticity by being crosslinked (vulcanized) with addition of sulfur or the like. Therefore, once the rubber is crosslinked (vulcanized), it loses its fluidity due to this three-dimensional network structure, and thus it is difficult to be reused it even if it is heated. The thermoplastic elastomer (TPE) of the present invention shall not be included in the above-described rubber component.

The "aromatic vinyl unit" is a monomeric unit derived from an aromatic vinyl compound.

A "standardized rim" is a rim defined for each tire in a standard system including a standard, on which the tire is based, by the standard, i.e., a "standard rim" in JATMA, "Design Rim" in TRA, or "Measuring Rim" in ETRTO, to which references are made in this order, and if there is an applicable size at the time of the reference, the rim conforms to its standard. Besides, if a size of the tire is not specified in the above-described standard system, the standardized rim refers to a rim which can be assembled to the tire and whose width is narrowest among rims having the smallest diameter that does not cause air leakage between the rim and the tire.

A "standardized internal pressure" is an air pressure defined for each tire, in a standard system including a standard on which the tire is based, by the standard, i.e., a "MAXIMUM AIR PRESSURE" in JATMA, a maximum value described in Table "TIRE LOAD LIMITS AT VARIOUS COLD INFLATION PRESSURES" in TRA, or "INFLATION PRESSURE" in ETRTO. In a case of a tire that is not specified by the standard, the standardized internal pressure is defined as 250 kPa.

The "standardized state" is a state where the tire is rim-assembled on a standardized rim and a standardized internal pressure is filled, and no load is applied. Besides, in a case of a tire having a size not specified in the above-described standard system, the standardized state is a state where the tire is rim-assembled on the minimum rim, 250 kPa is filled, and no load is applied. In the present specification, a dimension of each part of a tire (a tire cross-sectional width Wt, etc.) is measured in the above-described standardized state, unless otherwise specified.

A "standardized load" means a load defined in the standard system including the standard on which the tire is based. A "MAXIMUM LOAD CAPACITY" in the JATMA standard, a "MAXIMUM VALUE" published in "TIRE LOAD LIMITS AT VARIOUS COLD INFLATION PRESSURES" in the TRA standard, and a "LOAD CAPACITY" in the ETRTO standard are standardized loads.

The "tire cross-sectional width Wt" refers to a maximum width of a tire cross-section in a standardized state. However, it is a maximum width between outer surfaces of sidewalls excluding, if any, patterns or characters on the side surface of the tire. Moreover, in brief, it can be measured by calculating a maximum linear distance in a width direction excluding characters on the sidewalls with a space between bead parts adjusted to a standardized rim width, in a cross section of the tire cut out on a plane including a tire rotation axis.

The "belt layer width B of the tire" is a maximum length in a width direction of a belt layer of a tire in a standardized state. Briefly, in the similar manner as for the above-mentioned tire cross-sectional width Wt, it can be measured by calculating a maximum linear distance between end points of the belt layer with a space between bead parts adjusted to a standardized rim width, in a cross section of the tire cut out on a plane including a tire rotation axis. Besides, when the belt layer is formed of a plurality of belt layers, one having the longest distance among them is referred to as a "belt total width B of the tire".

The "tire outer diameter Dt" is a diameter of a tire in a standardized state.

The "small hole" is a small hole present on a tread surface, which extends from an inside of a tread and opens into the tread surface. The small holes exist independently and do not communicate with circumferential grooves, lateral grooves, and the like.

<Measuring method>

The "glass transition temperature (Tg) of the thermoplastic elastomer" is a value measured under a condition of a temperature rising rate of 10°C/min, using a differential scanning calorimeter (Q200) manufactured by TA Instruments Japan Inc., according to JIS K 7121. A "glass transition temperature (Tg) of the rubber component" is also a value measured in the same manner.

An "aromatic vinyl unit amount" is calculated by $^1$H-NMR measurement. For example, it is applied to a content of an aromatic vinyl compound in a conjugated diene-based polymer. The "styrene content" is calculated by $^1$H-NMR measurement. For example, it is applied to a styrene-based thermoplastic elastomer and a styrene-containing rubber.

A "vinyl bond content (1,2-bond butadiene unit amount)" is measured by infrared absorption spectrometry. For example, it is applied to a styrene-butadiene rubber, a butadiene rubber, and the like.

A "cis content (cis-1,4-bond butadiene unit amount)" is a value calculated by infrared absorption spectrometry according to JIS K 6239-2: 2017, and is applied to, for example, a rubber component having a repeating unit derived from butadiene such as a butadiene rubber and the like.

A "weight-average molecular weight (Mw)" can be calculated in terms of a standard polystyrene based on measurement values obtained by a gel permeation chromatography (GPC) (e.g., GPC-8000 Series manufactured by Tosoh Corporation, detector: differential refractometer, column: TSKGEL SUPERMULTIPORE HZ-M manufactured by Tosoh Corporation). For example, it is applied to a rubber component, a thermoplastic elastomer, a resin component, and the like.

An "average primary particle size of carbon black" can be calculated by observing carbon black with a transmission or scanning electron microscope, measuring 400 or more primary particles of carbon black observed in the field of view, and averaging them. A "$N_2SA$ of carbon black" is measured according to JIS K 6217-2:2017.

An "average primary particle size of silica" can be calculated by observing silica with a transmission or scanning electron microscope, measuring 400 or more primary particles of silica observed in the field of view, and averaging them. A "CTAB (cetyltrimethylammonium bromide) specific surface area of silica" is measured according to ASTM D3765-92. A "$N_2SA$ of silica" is measured by the BET method according to ASTM D3037-93.

The "tan $\delta$ at 70°C (70°C tan $\delta$)" is a loss tangent measured using a dynamic viscoelasticity measuring device (e.g., EPLEXOR series manufactured by gabo Systemtechnik GmbH) under a condition of a temperature at 70°C, a frequency of 10 Hz, and a dynamic strain amplitude of 1%. A sample for loss tangent measurement is a vulcanized rubber composition of 20 mm in length × 4 mm in width × 1 mm in thickness. When it is produced by being cut out from a tire, it is cut out from a tread part of the tire so that a tire circumferential direction becomes a long side and a tire radial direction becomes a thickness direction.

The "tan $\delta$ at 0°C (0°C tan $\delta$)" is a loss tangent measured using a dynamic viscoelasticity measuring device (e.g., EPLEXOR series manufactured by gabo Systemtechnik GmbH) under a condition of a temperature at 0°C, an initial strain of 10%, a dynamic strain of 2.5%, and a frequency of 10 Hz. A sample for the measurement is produced in the same manner as in the case for the 70°C tan $\delta$.

A "softening point of a resin component" is a temperature at which a sphere drops when the softening point specified in JIS K 6220-1: 2001 is measured with a ring and ball softening point measuring device.

<<Tire>>

The tire that is one embodiment of the present invention will be described in detail below with reference to the drawings. However, the following descriptions are illustrative for explaining the present invention, and are not intended to limit the technical scope of the present invention to this description range only. Besides, in the present specification, a numerical range identified with "to" means to include the numerical values of both ends.

<Tire dimension>

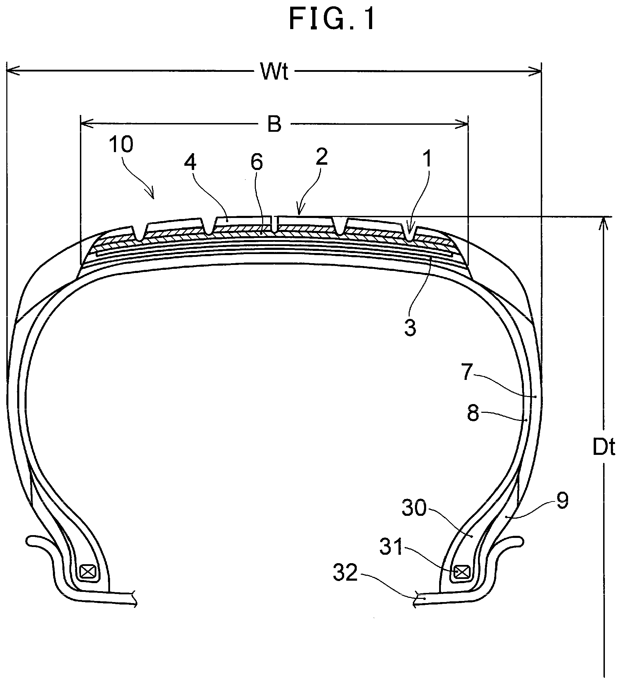

FIG. 1 is a cross-sectional view showing a part of a tire according to the present invention. A vertical direction is a tire radial direction, a horizontal direction is a tire width direction, and a direction perpendicular to a paper surface is a tire circumferential direction.

The tire cross-sectional width Wt of the present invention is preferably 125 mm or more, more preferably 150 mm or more, further preferably 175 mm or more. Moreover, the tire cross-sectional width Wt is preferably less than 305 mm, more preferably less than 245 mm, further preferably less than 210 mm.

The belt layer width B is preferably 120 mm or more, more preferably 130 mm or more, further preferably 140 mm or more, particularly preferably 150 mm or more. Moreover, the belt layer width B is preferably less than 205 mm, more preferably less than 200 mm, further preferably less than 190 mm, further preferably less than 180 mm, particularly preferably less than 170 mm.

The tire of the present invention is characterized in that, with a tire cross-sectional width being as Wt (mm) and a belt layer width of the tire being as B (mm) when a standardized load is applied to the tire and a tread is pressed against a flat surface, in a standardized state, when it is defined as Y=(B-16)/Wt, Y is 0.75 or less.

The value of Y is preferably 0.74 or less, more preferably 0.73 or less, further preferably 0.72 or less, from the viewpoint of effects of the present invention. A lower limit value of Y is, but not particularly limited to, preferably 0.50 or more, more preferably 0.60 or more, further preferably 0.65 or more.

In the present invention, a ratio (X/Y) of a total content X (part by mass) of the thermoplastic elastomer based on 100 parts by mass of the rubber component in the rubber composition of the tread part to Y is 3.0 or more, preferably 5.0 or more, more preferably 8.0 or more, further preferably 10.0 or more, further preferably 12.0 or more, further preferably 14.0 or more, further preferably 18.0 or more, further preferably 20.0 or more, further preferably 25.0 or more, further preferably 28.0 or more, further preferably 30.0 or more, further preferably 35.0 or more. Moreover, an upper limit value of X/Y is preferably 100 or less, more preferably 94 or less, further preferably 67 or less. A total content X (part by mass) of the thermoplastic elastomer based on 100 parts by mass of the rubber component will be described later.

The tire outer diameter Dt is preferably 585 mm or more, more preferably 600 mm or more, further preferably 625 mm or more. Moreover, the tire outer diameter Dt is preferably less than 843 mm, more preferably less than 725 mm, further preferably less than 685 mm.

In the tire of the present invention, when the tire cross-sectional width is defined as Wt (mm) and the tire outer diameter is defined as Dt (mm), it is preferable that Wt and Dt satisfy the following inequality (1):

$$(\pi/4) \times (Dt^2/Wt) \geqq 1500 \cdots (1)$$

Here, when Dt increases, the value of the inequality (1) increases, and conversely, when Dt decreases, the value decreases. On the other hand, when Wt increases, the value of the inequality (1) decreases, and conversely, when Wt decreases, the value increases. Therefore, paying attention to this point, Dt and Wt can be adjusted so as to satisfy the inequality (1).

The value of the inequality (1) is preferably 1500 or more, more preferably 1520 or more, further preferably 1525 or more. Moreover, an upper limit value of the inequality (1) is, but not particularly limited to, preferably 2800 or less, more preferably 2700 or less, further preferably 2600 or less.

Specific examples of a tire size satisfying the inequality (1) include 125/65R19, 145/60R18, 145/60R19, 155/55R18, 155/55R19, 155/70R17, 155/70R19, 165/55R20, 165/55R21, 165/60R19, 165/65R19, 165/70R18, 175/55R19, 175/55R20, 175/55R22, 175/60R18, 185/55R19, 185/60R20, 195/50R20, 195/55R20, 205/55R16, 195/65R15, 205/55R16, and the like.

<Structure of tread>

The tread part of the tire illustrated in FIG. 1 comprises a base rubber layer 6 adjacent to an outer side of a belt layer 3 in a tire radial direction. The tire of the present invention comprises the base rubber layer 6 adjacent to the outer side of the belt layer 3 in the tire radial direction. As long as the object of the present invention is achieved, a cap rubber layer 4 may have two or more layers, and may further have one or more rubber layers between the cap rubber layer 4 and the base rubber layer 6.

<Tread pattern>

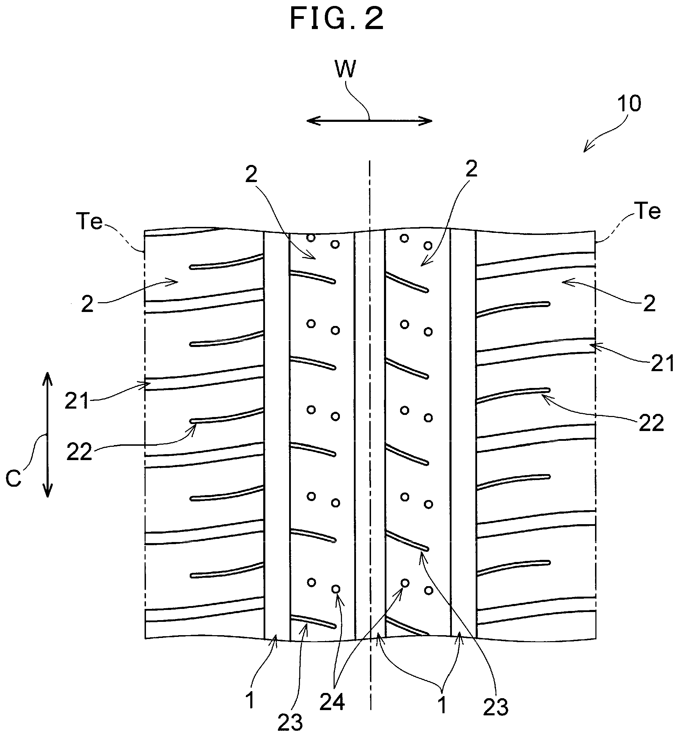

FIG. 2 is a developed view of a tread pattern on a tread surface. In FIG. 2, a tread surface 10 of the tire has a circumferential groove 1 extending continuously in a tire circumferential direction C (in an example of FIG. 2, extending linearly along the tire circumferential direction), a lateral groove 21 and sipes 22 and 23 extending in a width direction, as shown in FIG. 2. The tire of the present invention preferably has circumferential grooves.

In FIG. 2, three circumferential grooves 1 are provided, though the number of circumferential grooves is not particularly limited and may be, for example, two to five. Moreover, the circumferential groove 1 is not limited to such an aspect, and may extend in, for example, a wavy shape, a sinusoidal shape, or a zigzag shape along the circumferential direction.

In FIG. 2, the tread surface 10 has land parts 2 partitioned by a plurality of circumferential grooves 1 in a tire width direction W. The tread surface 10 is preferably provided with a lateral groove (width direction groove) and/or sipes. In FIG. 2, the land part 2 is provided with a plurality of shoulder lateral grooves 21 having a terminal end opened to the circumferential groove 1, a plurality of shoulder sipes 22 having one end opened to the circumferential groove 1, and a plurality of center sipes 23 having one end opened to the circumferential groove 1.

The land part 2 preferably has one or more small holes. In FIG. 2, two small holes 24 are present in each part of the land parts partitioned by adjacent center sipes 23. An opening area of the small hole to the tread surface is preferably 0.1 to 15 mm$^2$, more preferably 0.5 to 10 mm$^2$, further preferably 1.0 to 7.0 mm$^2$, particularly preferably 1.5 to 5.0 mm$^2$. When such small hole having the opening area is provided, water between the tread surface and the road surface can be removed when the tire grounds a wet road surface, and followability to the road surface becomes easy to be obtained, in particular, turning performance during high-speed running becomes improved. Moreover, it becomes possible to increase the surface area of the tread part without adversely affecting other performances, and therefore, heat dissipation property at the tread part becomes improved, and it is considered that temperature rising at the tire and the side part can be suppressed.

Besides, in the present specification, a "groove" including a circumferential groove and a width direction groove refers to a recess having a width at least larger than 2.0 mm. On the other hand, in the present specification, a "sipe" refers to a narrow notch having a width of 2.0 mm or less, preferably 0.5 to 1.5 mm.

[Physical properties of rubber composition]

The 0°C tan δ of the rubber composition of the tread part of the tire of the present invention (hereinafter referred to as the rubber composition according to the present invention) is preferably greater than 0.25, more preferably greater than 0.28, further preferably greater than 0.30, particularly preferably greater than 0.32, from the viewpoint of the effects of the present invention. Moreover, the 0°C tan δ of the rubber composition of the present invention is preferably less than 1.50, more preferably less than 1.40, further preferably less than 1.30, further preferably less than 1.20, particularly preferably less than 1.10, from the viewpoint of reducing heat generation during running to improve fuel efficiency. Besides, the 0°C tan δ of the rubber composition can be appropriately adjusted depending on types and compounding amounts of a rubber component, a plasticizing agent, etc.

The 70°C tan δ of the rubber composition according to the present invention is preferably greater than 0.08, more preferably greater than 0.10, further preferably greater than 0.11, particularly preferably greater than 0.12, from the viewpoint of the effects of the present invention. Moreover, the 70°C tan δ of the rubber composition of the present invention is preferably less than 0.45, more preferably less than 0.42, further preferably less than 0.39, further preferably less than 0.36, particularly preferably less than 0.33, from the viewpoint of reducing heat generation during running to improve fuel efficiency.

Values of 0°C tan δ and 70°C tan δ can be adjusted by a conventional method in the tire industry. For example, the value of 70°C tan δ can be decreased by decreasing a content of a filler, and conversely, it can be increased by increasing the content of the filler. Therefore, those skilled in the art can appropriately adjust the value of 70°C tan δ depending on a target 70°C tan δ.

In the rubber composition according to the present invention, the ratio (70°C tan δ/0°C tan δ) of the tan δ at 70°C to the tan δ at 0°C is preferably 1.80 or less, more preferably 1.50 or less, further preferably 1.00 or less, further preferably 0.80 or less, further preferably 0.75 or less, particularly preferably 0.70 or less. Moreover, a lower limit value of 70°C tan δ/0°C tan δ is preferably 0.05 or more, more preferably 0.07 or more, further preferably 0.10 or more, from the viewpoint of the effects of the present invention.

[Compounding of rubber composition]

The rubber composition according to the present invention comprises a rubber component and a thermoplastic elastomer. The rubber component includes a multi-component polymer having an aromatic vinyl unit and a conjugated diene unit, and the thermoplastic elastomer includes a styrene-based thermoplastic elastomer having an alkylene unit.

<Rubber component>

As rubber components used for production of the rubber composition according to the present invention, the multi-component polymer having an aromatic vinyl unit and a conjugated diene unit, a butadiene rubber (BR), and an isoprene-based rubber are appropriately used. Moreover, the rubber composition according to the present invention comprises a base rubber layer, and a rubber component of the rubber composition constituting the base rubber layer comprises at least one of an isoprene-based rubber and a BR.

Examples of the multi-component polymer having an aromatic vinyl unit and a conjugated diene unit include a styrene-butadiene rubber (SBR), a styrene-isoprene-butadiene rubber (SIBR), a styrene-isoprene rubber (SIR), and the like. Among them, a SBR is appropriately used. The SBR is not particularly limited, examples of which include a solution-polymerized SBR (S-SBR), an emulsion-polymerized SBR (E-SBR), modified SBRs (a modified S-SBR, a modified E-SBR) thereof, and the like. Examples of the modified SBR include a SBR modified at its terminal and/or main chain, a modified SBR coupled with tin, a silicon compound, etc. (a modified SBR of condensate or having a branched structure, etc.), and the like. Among them, the S-SBR and the modified SBR are preferable. Furthermore, hydrogenated additives of these SBRs (hydrogenated SBRs) and the like can also be used. These SBRs may be used alone, or two or more thereof may be used in combination.

As the SBR, an extended SBR can be used, or a non-extended SBR can be used. An extending amount of the extended SBR, i.e., a content of an extending plasticizing agent contained in the SBR when used is preferably 10 to 50 parts by mass based on 100 parts by mass of a rubber solid content of the SBR.

As S-SBRs that can be used in the present invention, those commercially available from JSR Corporation, Sumitomo Chemical Co., Ltd., Ube Industries, Ltd., Asahi Kasei Corporation, ZS Elastomer Co., Ltd., etc. can be used.

As the modified SBRs, those modified at a main chain and/or a terminal thereof with a modifying agent or those modified with a polyfunctional modifying agent such as, for example, a tin tetrachloride, a silicon tetrachloride, and the like and partially having a branched structure may be used, but a SBR modified with a modifying agent having a functional group interacting with silica at a main chain and/or a terminal thereof (a modified BR for silica) is preferable. In particular, it is preferable that a first layer and/or a second layer comprises a modified SBR.

Examples of the above-described functional group interacting with silica include, for example, an amino group, an amide group, an alkoxysilyl group, an isocyanate group, an imino group, an imidazole group, an urea group, an ether group, a carbonyl group, an oxycarbonyl group, a sulfide group, a disulfide group, a sulfonyl group, a sulfinyl group, a thiocarbonyl group, an ammonium group, an imide group, a hydrazo group, an azo group, a diazo group, a carboxyl group, a nitrile group, a pyridyl group, an alkoxy group, a hydrocarbon group, a hydroxyl group, an oxy group, an epoxy group, and the like. Besides, these functional groups may have a substituent. Among them, the amino group, the epoxy group, the hydroxyl group, the alkoxy group, and the alkoxysilyl group are preferable, and the amino group and the alkoxysilyl group are more preferable, from the viewpoint of improving dispersibility of silica.

An aromatic vinyl unit amount of the multi-component polymer having an aromatic vinyl unit and a conjugated diene unit is preferably 10% by mass or more, more preferably 15% by mass or more, further preferably 20% by mass or more, from the viewpoint of high-speed turning performance. Moreover, it is preferably 60% by mass or less, more preferably 55% by mass or less, further preferably 50% by mass or less, from the viewpoints of temperature dependence of grip performance and blow resistance. Besides, in the present specification, a styrene content is calculated by the above-described measuring method.

A vinyl content of the multi-component polymer having an aromatic vinyl unit and a conjugated diene unit is preferably 10 mol% or more, more preferably 15 mol% or more, further preferably 20 mol% or more, from the viewpoints of ensuring reactivity with silica, wet grip performance, rubber strength, and abrasion resistance. Moreover, the vinyl content is preferably 70 mol% or less, more preferably 65 mol% or less, further preferably 60 mol% or less, from the viewpoints of prevention of increase in temperature dependence, elongation at break, and abrasion resistance. Besides, in the present specification, a vinyl content (1,2-bond butadiene unit amount) is calculated by the above-described measuring method.

A weight-average molecular weight (Mw) of the multi-component polymer having an aromatic vinyl unit and a conjugated diene unit is preferably 200,000 or more, more preferably 250,000 or more, further preferably 300,000 or more, from the viewpoint of wet grip performance. Moreover, it is preferably 2,000,000 or less, more preferably 1,800,000 or less, further preferably 1,500,000 or less, from the viewpoint of cross-linking uniformity. Besides, the weight-average molecular weight of the multi-component polymer having an aromatic vinyl unit and a conjugated diene unit is calculated by the above-described measuring method.

A content of the multi-component polymer having an aromatic vinyl unit and a conjugated diene unit in the rubber component of the rubber composition according to the present invention is preferably 50% by mass or more, more preferably 55% by mass or more, further preferably 60% by mass or more, further preferably 65% by mass or more, further preferably 70% by mass or more, further preferably 75% by mass or more, particularly preferably 80% by mass or more, from the viewpoint of fuel efficiency. Moreover, an upper limit value of the content of the multi-component polymer having an aromatic vinyl unit and a conjugated diene unit in the rubber component can be, but not particularly limited to, for example, 90% by mass or less, 95% by mass or less, or 100% by mass, i.e., the rubber component can also consist of a multi-component polymer having an aromatic vinyl unit and a conjugated diene unit.

(BR)

The BR is not particularly limited, and those common in the tire industry can be used such as, for example, a BR having a cis content of less than 50 mol% (a low cis BR), a BR having a cis content of 90 mol% or more (a high cis BR), a rare-earth-based butadiene rubber synthesized using a rare-earth element-based catalyst (a rare-earth-based BR), a BR containing a syndiotactic polybutadiene crystal (a SPB-containing BR), a modified BR (a high cis modified BR, a low cis modified BR), and the like. These BRs may be used alone, or two or more thereof may be used in combination.

As the high cis BR, for example, those commercially available from Zeon Corporation, Ube Industries, Ltd., JSR Corporation, etc. can be used. When the high cis BR is compounded, low temperature characteristics and abrasion resistance can be improved. The cis content is preferably 95 mol% or more, more preferably 96 mol% or more, further preferably 97 mol% or more, particularly preferably 98 mol% or more. Besides, in the present specification, the cis content (cis-1,4-bond butadiene unit amount) is a value calculated by infrared absorption spectrometry.

As the rare-earth-based BR, those which are synthesized using a rare-earth element-based catalyst, and have a vinyl content of preferably 1.8 mol% or less, more preferably 1.0 mol% or less, further preferably 0.8% mol or less and a cis content of preferably 95 mol% or more, more preferably 96 mol% or more, further preferably 97 mol% or more, particularly preferably 98 mol% or more, can be used. As the rare-earth-based BR, for example, those commercially available from LANXESS, etc. can be used.

Examples of the SPB-containing BR include those in which 1,2-syndiotactic polybutadiene crystal is chemically bonded with BR and dispersed, but not those in which the crystal is simply dispersed in the BR. As such a SPB-containing BR, those commercially available from Ube Industries, Ltd., etc. can be used.

Examples of the modified BR include those obtained by adding a tin compound after polymerizing 1,3-butadiene by a lithium initiator, and further those in which the terminal of the modified BR molecule has tin-carbon bond (a tin-modified BR), a butadiene rubber modified with a modifying agent having the above-described functional group interacting with silica at a main chain and/or a terminal thereof (a modified BR for silica), and the like. Moreover, the modified BR may be either non-hydrogenated or hydrogenated.

A weight-average molecular weight (Mw) of the BR is preferably 300,000 or more, more preferably 350,000 or more, further preferably 400,000 or more, from the viewpoint of abrasion resistance. Moreover, it is preferably 2,000,000 or less, more preferably 1,000,000 or less, from the viewpoint of cross-linking uniformity. Besides, the weight-average molecular weight of the BR is measured by the above-described measuring method.

A content of the BR when compounded as a rubber component in the rubber component is preferably 50% by mass or less, more preferably 40% by mass or less, further preferably 30% by mass or less, particularly preferably 25% by mass or less, from the viewpoint of increasing the compounding amount of the multi-component polymer having an aromatic vinyl unit and a conjugated diene unit. Moreover, a lower limit value of the content of the BR when compounded can be, but not particularly limited to, for example, 1% by mass or more, 3% by mass or more, 5% by mass or more, 10% by mass or more, or 15% by mass or more.

(Isoprene-based rubber)

As an isoprene-based rubber, for example, those common in the tire industry can be used, such as an isoprene rubber (IR), a natural rubber, and the like. Examples of the natural rubber include a non-modified natural rubber (NR), as well as a modified natural rubber such as an epoxidized natural rubber (ENR), a hydrogenated natural rubber (HNR), a deproteinized natural rubber (DPNR), an ultra pure natural rubber, a grafted natural rubber, and the like. These isoprene-based rubbers may be used alone, or two or more thereof may be used in combination.

The NR is not particularly limited, and those common in the tire industry can be used, examples of which include, for example, SIR20, RSS#3, TSR20, and the like.

A content of the isoprene-based rubber when compounded as a rubber component in the rubber component is preferably 50% by mass or less, more preferably 40% by mass or less, further preferably 30% by mass or less, particularly preferably 20% by mass or less, from the viewpoint of increasing the compounding amount of the multi-component polymer having an aromatic vinyl unit and a conjugated diene unit. Moreover, a lower limit value of the content of the isoprene-based rubber when compounded can be, but not particularly limited to, for example, 1% by mass or more, 3% by mass or more, 5% by mass or more, 10% by mass or more, or 15% by mass or more.

(Other rubber components)

The rubber component according to the present invention may comprises rubber components other than the multi-component polymer having an aromatic vinyl unit and a conjugated diene unit, the BR, and the isoprene-based rubber. As other rubber components, cross-linkable rubber components commonly used in the tire industry can be used, such as, for example, a chloroprene rubber (CR), an acrylonitrile-butadiene rubber (NBR), a hydrogenated nitrile rubber (HNBR), a butyl rubber (IIR), an ethylene propylene rubber, a polynorbornene rubber, a silicone rubber, a polyethylene chloride rubber, a fluororubber (FKM), an acrylic rubber (ACM), a hydrin rubber, and the like. These other rubber components may be used alone, or two or more thereof may be used in combination.

<Thermoplastic elastomer (TPE)>

The rubber composition according to the present invention comprises a thermoplastic elastomer (TPE). Examples of the thermoplastic elastomer (TPE) include, for example, a styrene-based thermoplastic elastomer, an urethane-based thermoplastic elastomer, an olefin-based thermoplastic elastomer, a polyester-based thermoplastic elastomer, a polyamide-based thermoplastic elastomer, and the like. The thermoplastic elastomer (TPE) can be used alone, or two or more thereof can be used in combination.

(Styrene-based thermoplastic elastomer)

The rubber composition according to the present invention comprises a styrene-based thermoplastic elastomer. The styrene-based thermoplastic elastomer is a copolymer having at least one styrene block (hard segment) and at least one elastomer block (soft segment). A molecular structure of the styrene-based thermoplastic elastomer is, but not particularly limited to, preferably a molecular structure having a styrene block at one terminal or both terminals thereof and an elastomer block in the other parts thereof. When it has a styrene block at least at one terminal thereof, a better grip performance tends to be obtained. Moreover, it is more preferable that the styrene-based thermoplastic elastomer has a structure having no styrene block in a main chain part other than terminals thereof. With such a structure, hardness of the thermoplastic elastomer in a normal temperature range does not become too high, and better fracture characteristics and turning performance tend to be obtained.

Examples of the styrene-based thermoplastic elastomer include, for example, a styrene-isobutylene block copolymer (SIB), a styrene-butadienestyrene block copolymer (SBS), a styrene-isoprene-styrene block copolymer (SIS), a styrene-ethylene-butylene block copolymer (SEB), a styrene-ethylene/propylene block copolymer (SEP), a styrene-ethylene/butylene-styrene block copolymer (SEBS), a styrene-ethylene/butylene-ethylene block copolymer (SEBC), a hydrogenated styrene/butadiene copolymer (HSBR), a styrene-ethylene/propylene-styrene block copolymer (SEPS), a styrene-ethylene/ethylene/propylene-styrene block copolymer (SEEPS), a styrene-butadiene/butylene-styrene block copolymer (SBBS), a styrene-alkylene block copolymer, and the like.

The styrene-based thermoplastic elastomer compounded in the rubber composition according to the present invention has an alkylene unit. Examples of the alkylene unit include methylene, ethylene, propylene, butylene, and the like. That is, examples of the elastomer block include vinyl-polydiene such as styrene-butadiene (SB), polyisoprene (IP), polybutadiene, polyethylene, polychloroprene, poly 2,3-dimethylbutadiene, and the like. Moreover, as the elastomer block, a hydrogenated elastomer block can also be used.

A glass transition temperature (Tg) of the styrene-based thermoplastic elastomer having the alkylene unit is preferably -20°C or lower, more preferably -30°C or lower, further preferably -35°C or lower, from the viewpoint of lowering the tan $\delta$ of the rubber composition to reduce rolling resistance. An upper limit value of the glass transition temperature (Tg) of the styrene-based thermoplastic elastomer having the alkylene unit is, but not particularly limited to, usually -60°C or higher.

A styrene content (styrene unit content) of the styrene-based thermoplastic elastomer having the alkylene unit is preferably 20% by mass or more, more preferably 25% by mass or more, further preferably 30% by mass or more, from the viewpoint of high-speed turning performance. Moreover, it is preferably 75% by mass or less, more preferably 70% by mass or less, further preferably 65% by mass or less, from the viewpoint of suppressing heat generation.

The rubber composition according to the present invention comprises a styrene-based thermoplastic elastomer having an alkylene unit, and may comprise thermoplastic elastomers other than the styrene-based thermoplastic elastomer having the alkylene unit.

(Urethane-based thermoplastic elastomer)

The urethane-based thermoplastic elastomer is not particularly limited, but for example, those prepared from polyol and diisocyanate can be appropriately used. Examples of polyol include a polyester-based polyol, a polyester ether-based polyol, a polycarbonate-based polyol, a polyether-based polyol, and the like. Examples of diisocyanate include, for example, tolylene diisocyanate (TDI), 4,4'-diphenylmethane diisocyanate (MDI), and the like.

(Olefin-based thermoplastic elastomer)

Examples of the olefin-based thermoplastic elastomer include, for example, an ethylene/$\alpha$-olefin copolymer such as an ethylene-propylene copolymer (EPR), an ethylene-butene copolymer (EBR), an ethylene-hexene copolymer (EHR), an ethylene-octene copolymer (EOR), and the like; an ethylene/$\alpha$-olefin/diene terpolymer such as an ethylene-propylene-ethylidenenorbornene copolymer, an ethylene-propylene-butadiene copolymer, an ethylene-propylene-isoprene copolymer, and the like.

The thermoplastic elastomer (TPE) may be hydrogenated. Examples of the hydrogenated thermoplastic elastomer include, for example, a hydrogenated styrene-based thermoplastic elastomer.

As the thermoplastic elastomer (TPE), those modified with a modifying agent to introduce a modifying group can be used, if desired. As such a modifying group, any of those usually used in this field can be appropriately used, examples of which include, for example, an alkoxysilyl group (e.g., a trimethoxysilyl group, a triethoxysilyl group), and the like. For example, if a styrene-based thermoplastic elastomer having a styrene terminal at least at one end is synthesized and then treated with chlorotriethoxysilane as a modifying agent, a modified styrene-based thermoplastic elastomer can be obtained in which a triethoxysilyl group is introduced into an active terminal of the styrene-based thermoplastic elastomer.

As the thermoplastic elastomer (TPE), a commercially available product or a synthetically obtained product may be used. Examples of the commercially available product include, for example, those manufactured and sold by JSR Corporation, Asahi Kasei Corporation, Kuraray Co., Ltd., and Nippon Miractran Company Limited.

A content X (part by mass) of the thermoplastic elastomer (TPE) based on 100 parts by mass of the rubber component is preferably greater than 5 parts by mass, more preferably greater than 9 parts by mass, further preferably 10 parts by mass or more, further preferably greater than 15 parts by mass, further preferably greater than 20 parts by mass, particularly preferably 30 parts by mass or more, from the viewpoint of reducing rolling resistance to improve fuel efficiency. Moreover, the content X (part by mass) of the thermoplastic elastomer is preferably less than 100 parts by mass, more preferably less than 90 parts by mass, further preferably less than 80 parts by mass, particularly preferably less than 70 parts by mass, from the viewpoint of abrasion resistance.

<Filler>

The rubber composition according to the present invention preferably comprises a filler, and, as the filler, it preferably comprises carbon black or silica, more preferably comprises silica, and further preferably comprises silica and carbon black.

(Carbon black)

Carbon black is not particularly limited, and those common in the tire industry can be used such as GPF, FEF, HAF, ISAF, SAF, and the like, and specifically, N110, N115, N120, N125, N134, N135, N219, N220, N231, N234, N293, N299, N326, N330, N339, N343, N347, N351, N356, N358, N375, N539, N550, N582, N630, N642, N650, N660, N683, N754, N762, N765, N772, N774, N787, N907, N908, N990, N991, and the like can be appropriately used, and in-house synthesized products and the like can also be appropriately used. They may be used alone, or two or more thereof may be used in combination.

A nitrogen adsorption specific surface area ($N_2SA$) of carbon black is preferably 50 $m^2/g$ or more, more preferably 80 $m^2/g$ or more, further preferably 100 $m^2/g$ or more, from the viewpoints of weather resistance and reinforcing property. Moreover, it is preferably 250 $m^2/g$ or less, more preferably 220 $m^2/g$ or less, from the viewpoints of dispersibility, reduction in rolling resistance, fracture characteristics, and durability. Besides, the $N_2SA$ of carbon black in the present specification can be measured by the above-described measuring method.

A content of carbon black when compounded based on 100 parts by mass of the rubber component is preferably greater than 1 part by mass, more preferably greater than 3 parts by mass, further preferably greater than 4 parts by mass, from the viewpoints of weather resistance and reinforcing property. Moreover, it is preferably less than 30 parts by mass, more preferably less than 20 parts by mass, further preferably less than 10 parts by mass, from the viewpoints of reducing heat generation and rolling resistance.

(Silica)

When silica is compounded in the rubber composition according to the present invention, rolling resistance can be reduced and fuel efficiency can be improved. Silica is not particularly limited, and those common in the tire industry can be used, such as, for example, silica prepared by a dry process (anhydrous silica), silica prepared by a wet process (hydrous silica), and the like. Among them, hydrous silica prepared by a wet process is preferable from the reason that it has many silanol groups. Silica may be used alone, or two or more thereof may be used in combination. Moreover, as these silica, those made of a biomass material as a raw material such as rice husks and the like may be used in addition to those made of hydrous silica or the like as a raw material.

A nitrogen adsorption specific surface area ($N_2SA$) of silica as measured by the BET method is preferably greater than 150 $m^2/g$, more preferably greater than 170 $m^2/g$, further preferably greater than 200 $m^2/g$, from the viewpoint of elongation at break. Moreover, it is preferably less than 300 $m^2/g$, more preferably less than 250 $m^2/g$, further preferably less than 240 $m^2/g$, further preferably less than 236 $m^2/g$, from the viewpoints of reduction in rolling resistance and processability. Besides, the $N_2SA$ of silica can be measured by the above-described measuring method.

A CTAB (cetyltrimethylammonium bromide) specific surface area of silica (hereinafter referred to as a "CTAB of silica") is preferably greater than 150 $m^2/g$, more preferably greater than 160 $m^2/g$, further preferably greater than 170 $m^2/g$, further preferably greater than 190 $m^2/g$, from the viewpoint of dispersibility. Moreover, the CTAB of silica is preferably less than 350 $m^2/g$, more preferably less than 300 $m^2/g$, further preferably less than 250 $m^2/g$, particularly preferably less than 210 $m^2/g$, from the viewpoint of dispersibility of silica into a rubber phase. Besides, the CTAB of silica is measured by the above-described measuring method.

An average primary particle size of silica is preferably 20 nm or less, more preferably 18 nm or less, further preferably 17 nm or less. A lower limit value of the average primary particle size is, but not particularly limited to, preferably 1 nm or more, more preferably 3 nm or more, further preferably 5 nm or more, from the viewpoint of dispersibility of silica. When the average primary particle size of silica is within the above-described ranges, dispersibility of silica can be further improved, and reinforcing property, fracture characteristics, and abrasion resistance can be further improved. Besides, the average primary particle size of silica can be calculated by the above-described measuring method.

A content of silica when compounded based on 100 parts by mass of the rubber component is preferably greater than 40 parts by mass, more preferably greater than 50 parts by mass, further preferably greater than 60 parts by mass, from the viewpoint of reducing rolling resistance. Moreover, it is preferably less than 150 parts by mass, more preferably less than 140 parts by mass, further preferably less than 130 parts by mass, from the viewpoint of suppressing increase in rolling resistance due to deterioration of dispersibility of silica into a rubber.


(Other fillers)

As fillers other than carbon black and silica, those conventionally and commonly used in the tire industry can be compounded, such as aluminum hydroxide, calcium carbonate, alumina, clay, talc, and the like.

(Silane coupling agent)

Silica is preferably used in combination with a silane coupling agent. The silane coupling agent is not particularly limited, and any silane coupling agent conventionally used in combination with silica in the tire industry can be used, examples of which include, for example, mercapto-based silane coupling agents such as 3-mercaptopropyltrimethoxysilane, 3-mercaptopropyltriethoxysilane, 2-mercaptoethyltrimethoxysilane, 2-mercaptoethyltriethoxysilane, and the like; sulfide-based silane coupling agents such as bis(3-triethoxysilylpropyl)disulfide, bis(3-triethoxysilylpropyl)tetrasulfide, and the like; thioester-based silane coupling agents such as 3-octanoylthio-1-propyltriethoxysilane, 3-hexanoylthio-1-propyltriethoxysilane, 3-octanoylthio-1-propyltrimethoxysilane, and the like; vinyl-based silane coupling agents such as vinyltriethoxysilane, vinyltrimethoxysilane, and the like; amino-based silane coupling agents such as 3-aminopropyltriethoxysilane, 3-aminopropyltrimethoxysilane, 3-(2-aminoethyl)aminopropyltriethoxysilane, and the like; glycydoxy-based silane coupling agents such as γ-glycidoxypropyltriethoxysilane, γ-glycidoxypropyltrimethoxysilane, and the like; nitro-based silane coupling agents such as 3-nitropropyltrimethoxysilane, 3-nitropropyltriethoxysilane, and the like; chloro-based silane coupling agents such as 3-chloropropyltrimethoxysilane, 3-chloropropyltriethoxysilane, and the like; and the like. Among them, sulfide-based silane coupling agents and/or mercapto-based silane coupling agents are preferably compounded. As the silane coupling agent, for example, those commercially available from Momentive Performance Materials, etc. can be used. These silane coupling agents may be used alone, or two or more thereof may be used in combination.

A content of the silane coupling agent when compounded based on 100 parts by mass of the rubber component is preferably greater than 3.0 parts by mass, more preferably greater than 4.0 part by mass, further preferably greater than 5.0 parts by mass. Moreover, the content of the silane coupling agent is preferably less than 20 parts by mass, more preferably less than 15 parts by mass, further preferably less than 10 parts by mass.

A content of the silane coupling agent when compounded based on 100 parts by mass of silica is preferably 0.5 parts by mass or more, more preferably 1.0 part by mass or more, further preferably 2.0 parts by mass or more, particularly preferably 3.0 parts by mass or more, from the viewpoint of reacting the silane coupling agent with silica. Moreover, the content of the silane coupling agent based on 100 parts by mass of silica is preferably less than 20 parts by mass, more preferably less than 15 parts by mass, further preferably less than 10 parts by mass, from the viewpoint of preventing deterioration in abrasion resistance.

(Other compounding agents)

The rubber composition according to the present invention can appropriately comprise compounding agents conventionally and commonly used in the tire industry, such as, for example, oil, a resin component, an antioxidant, wax, zinc oxide, stearic acid, a cross-linking agent such as sulfur, a vulcanization accelerator, and the like, in addition to the above-described components.

(Resin component)

The rubber composition according to the present invention preferably comprises a resin component. The resin component is not particularly limited, examples of which include a petroleum resin, a terpene-based resin, a rosin-based resin, a phenol-based resin, and the like, which are commonly used in the tire industry. These resin components may be used alone, or two or more thereof may be used in combination.

The resin component is not particularly limited, and a resin commonly used in a conventional rubber composition for tire, such as an aromatic petroleum resin, a terpene-based resins, a rosin-based resin, a phenol-based resin, and the like can be used.

As the aromatic petroleum resin, for example, a coumarone indene resin, a coumarone resin, an indene resin, and an aromatic vinyl-based resin are appropriately used. As the aromatic vinyl-based resin, a homopolymer of $\alpha$-methylstyrene or styrene or a copolymer of $\alpha$-methylstyrene and styrene is preferable, and a copolymer of $\alpha$-methylstyrene and styrene is more preferable, because it is economical, easy to process, and excellent in heat generation. As the aromatic vinyl-based resin, for example, those commercially available from Kraton Corporation, Eastman Chemical Company, etc. can be used.

Examples of the terpene-based resin include a polyterpene resin consisting of at least one selected from terpene compounds such as $\alpha$-pinene, $\beta$-pinene, limonene, a dipentene, and the like; an aromatic-modified terpene resin made from a terpene compound and an aromatic compound; a terpene phenol resin made from a terpene compound and a phenol-based compound; and those in which these terpene-based resins are hydrogenated (hydrogenated terpene-based resins). Examples of the aromatic compound used as a raw material for the aromatic-modified terpene resin include, for example, styrene, $\alpha$-methylstyrene, vinyltoluene, a divinyltoluene, and the like. Examples of the phenol-based compound used as a raw material for the terpene phenol resin include, for example, phenol, bisphenol A, cresol, xylenol, and the like.

Example of the rosin-based resin include, but not particularly limited to, for example, a natural resin rosin and a rosin-modified resin obtained by modifying it by hydrogenation, disproportionation, dimerization, esterification, or the like.

Examples of the phenol-based resin include, but not particularly limited to, a phenol formaldehyde resin, an alkylphenol formaldehyde resin, an alkylphenol acetylene resin, an oil-modified phenol formaldehyde resin, and the like.

A softening point of the resin component is preferably 40°C or higher, more preferably 60°C or higher, further preferably 70°C or higher, from the viewpoint of grip performance. Moreover, it is preferably 150°C or lower, more preferably 140°C or lower, further preferably 130°C or lower, from the viewpoints of processability and improvement in dispersibility of a rubber component with a filler. Besides, the softening point of the resin component is measured by the above-described measuring method.

A content of the resin component when compounded based on 100 parts by mass of the rubber component is preferably greater than 3 parts by mass, more preferably greater than 5 parts by mass, further preferably greater than 8 parts by mass. Moreover, the content of the resin component is preferably less than 30 parts by mass, more preferably less than 20 parts by mass, further preferably less than 15 parts by mass, from the viewpoint of processability.

(Oil)

Examples of oil include, for example, a process oil, vegetable fats and oils, animal fats and oils, and the like. Examples of the process oil include a paraffin-based process oil, a naphthene-based process oil, an aroma-based process oil, and the like. In addition, as an environmental measure, process oil having a low content of a polycyclic aromatic compound (PCA) can also be used. Examples of the process oil having a low content of a PCA include a mild extraction solution (MES), a treated distillate aromatic extract (TDAE), a heavy naphthenic oil, and the like. Moreover, from the viewpoint of life cycle assessment, those obtained by purifying a waste oil after being used in a rubber mixer or an engine, or a waste cooking oil used in a restaurant may be used. Oil may be used alone, or two or more thereof may be used in combination. As oil, for example, products from Idemitsu Kosan Co., Ltd., Sankyo Yuka Kogyo K.K., ENEOS Corporation, Olisoy, H&R Group, Hokoku Corporation, Showa Shell Sekiyu K.K., Fuji Kosan Co., Ltd., etc. can be used.

A content of oil when compounded based on 100 parts by mass of the rubber component is preferably greater than 5 parts by mass, more preferably greater than 10 parts by mass, further preferably greater than 15 parts by mass, particularly preferably 20 parts by mass or more, from the viewpoint of processability. Moreover, it is preferably less than 120 parts by mass, more preferably less than 100 parts by mass, further preferably less than 80 parts by mass, particularly preferably less than 60 parts by mass, from the viewpoint of abrasion resistance. Besides, in the present specification, the content of oil also includes an amount of oil contained in an extended rubber.

(Antioxidant)

Examples of the antioxidant include, but not particularly limited to, for example, amine-based, quinoline-based, quinone-based, phenol-based, and imidazole-based compounds, and antioxidants such as a carbamic acid metal salt and the like, preferably, phenylenediamine-based antioxidants such as N-(1,3-dimethylbutyl)-N'-phenyl-p-phenylenediamine, N-isopropyl-N'-phenyl-p-phenylenediamine, N,N'-diphenyl-p-phenylenediamine, N,N'-di-2-naphthyl-p-phenylenediamine, N-cyclohexyl-N'-phenyl-p-phenylenediamine, N,N'-bis(1-methylheptyl)-p-phenylenediamine, N,N'-bis(1,4-dimethylpentyl)-p-phenylenediamine, N,N'-bis(1-ethyl-3-methylpentyl)-p-phenylenediamine, N-4-methyl-2-pentyl-N'-phenyl-p-phenylenediamine, N,N'-diaryl-p-phenylenediamine, hindered diaryl-p-phenylenediamine, phenylhexyl-p-phenylenediamine, phenyloctyl-p-phenylenediamine, and the like, and quinoline-based antioxidants such as 2,2,4-trimethyl-1,2-dihydroquinoline polymer, 6-ethoxy-2,2,4-trimethyl-1,2-dihydroquinoline, and the like. These antioxidants may be used alone, or two or more thereof may be used in combination.

A total content of the antioxidant when compounded based on 100 parts by mass of the rubber component is preferably greater than 0.5 parts by mass, more preferably greater than 1.0 part by mass, further preferably greater than 1.5 parts by mass, from the viewpoint of ozone crack resistance of a rubber. Moreover, it is preferably less than 10.0 parts by mass, more preferably less than 5.0 parts by mass, from the viewpoints of abrasion resistance and wet grip performance.

A content of stearic acid when compounded based on 100 parts by mass of the rubber component is preferably greater than 0.5 parts by mass, more preferably greater than 1.0 part by mass, further preferably greater than 1.4 parts by mass, from the viewpoint of processability. Moreover, it is preferably less than 10.0 parts by mass, more preferably less than 5.0 parts by mass, from the viewpoint of vulcanization rate.

A content of zinc oxide when compounded based on 100 parts by mass of the rubber component is preferably greater than 0.5 parts by mass, more preferably greater than 1.0 part by mass, further preferably greater than 1.4 parts by mass, from the viewpoint of processability. Moreover, it is preferably less than 10.0 parts by mass, more preferably less than 5.0 parts by mass, from the viewpoint of abrasion resistance.

(Cross-linking agent)

Sulfur is appropriately used as a cross-linking agent. As sulfur, a powdery sulfur, an oil processing sulfur, a precipitated sulfur, a colloidal sulfur, an insoluble sulfur, a highly dispersible sulfur, and the like can be used.

A content of sulfur when compounded based on 100 parts by mass of the rubber component is preferably 0.1 parts by mass or more, more preferably 0.3 parts by mass or more, further preferably 0.5 parts by mass or more, from the viewpoint of securing a sufficient vulcanization reaction. Moreover, it is preferably 5.0 parts by mass or less, more preferably 4.0 parts by mass or less, further preferably 3.0 parts by mass or less, particularly preferably 2.5 parts by mass or less, from the viewpoint of preventing deterioration. Besides, a content of the vulcanizing agent when an oil-containing sulfur is used as the cross-linking agent shall be a total content of pure sulfur comprised in the oil-containing sulfur.

As cross-linking agents other than sulfur, known organic cross-linking agents can also be used. The organic cross-linking agent is not particularly limited as long as it can form cross-linked chains other than a polysulfide bond, examples of which, include, for example, an alkylphenol-sulfur chloride condensate, sodium hexamethylene-1,6-bisthiosulfate dihydrate, 1,6-bis(N,N'-dibenzylthiocarbamoyldithio)hexane, dicumylperoxide, and the like. Among them, 1,6-bis(N,N'-dibenzylthiocarbamoyldithio)hexane is preferable. As these organic cross-linking agents, those commercially available from Taoka Chemical Co., Ltd., LANXESS, Flexsys, etc. can be used.

Examples of the vulcanization accelerator include, but not particularly limited to, for example, sulfenamide-based, thiazole-based, thiuram-based, thiourea-based, guanidine-based, dithiocarbamic acid-based, aldehyde-amine-based or aldehyde-ammonia-based, imidazoline-based, and xanthate-based vulcanization accelerators, and among them, sulfenamide-based vulcanization accelerators and thiuram-based vulcanization accelerators are preferable, and it is more preferable to use two of them in combination, from the viewpoint that desired effects can be obtained more appropriately.

Examples of the sulfenamide-based vulcanization accelerator include CBS (N-cyclohexyl-2-benzothiazyl sulfenamide), TBBS (N-t-butyl-2-benzothiazyl sulfenamide), N-oxyethylene-2-benzothiazyl sulfenamide, N,N'-diisopropyl-2-benzothiazyl sulfenamide, N,N-dicyclohexyl-2-benzothiazyl sulfenamide, and the like. Examples of the thiazole-based vulcanization accelerator include 2-mercaptobenzothiazole, dibenzothiazolyl disulfide, and the like. Examples of the thiuram-based vulcanization accelerator include tetramethylthiuram monosulfide, tetramethylthiuram disulfide, tetrabenzylthiuram disulfide (TBzTD), and the like. Examples of the guanidine-based vulcanization accelerator include diphenylguanidine (DPG), diorthotrilguanidine, orthotrilbiguanidine, and the like. They may be used alone, or two or more thereof may be used in combination. Among them, a combination of CBS and TBzTD is particularly preferable from the viewpoint that desired effects can be obtained more appropriately.

A content of the vulcanization accelerator when compounded based on 100 parts by mass of the rubber component is preferably 1 part by mass or more, more preferably 2 parts by mass or more. Moreover, the content of the vulcanization accelerator based on 100 parts by mass of the rubber component is preferably 8 parts by mass or less, more preferably 7 parts by mass or less, further preferably 6 parts by mass or less. When the content of the vulcanization accelerator is within the above-described ranges, breaking strength and elongation tend to be secured.

The rubber composition according to the present invention can be produced by a known method, for example, by a method of kneading components other than vulcanizing agents (cross-linking agents) and vulcanization accelerators, of the above-described components, with a known kneading machine used in the general tire industry such as a Banbury mixer, a kneader, an open roll, and the like, then adding the vulcanizing agents and the vulcanization accelerators to the mixture to further knead them, and then vulcanizing them, and the like.

<Tire>

The tire of the present invention comprises a tread part formed of the above-described rubber composition and is appropriately used as a tire for a passenger car, a high-performance tire for a passenger car, a heavy duty tire, or the like. Among them, it is preferably used as a tire for a passenger car.

The tire comprising the tread part formed of the above-described rubber composition can be produced by a usual method using the above-described rubber composition. That is, the tire can be produced by extruding an unvulcanized rubber composition, in which each component as described above is compounded in the rubber component as necessary, into a shape of a tread part, attaching it together with a belt layer and other tire members on a tire forming machine, and molding them by a usual method to form an unvulcanized tire, followed by heating and pressurizing this unvulcanized tire in a vulcanizing machine.

EXAMPLE

Examples that are considered to be preferable in implementation (Examples) are shown below, but the scope of the present invention is not limited to Examples.

Considering a tire having a tread part composed of a rubber composition obtained according to the compounding in Tables 1 and 2 using various chemicals shown below, results calculated based on the following various analysis and evaluation methods are shown in Tables 1 to 4.

NR: TSR20

SBR1: SBR1502 manufactured by JSR Corporation (unmodified E-SBR, styrene content: 23.5% by mass, vinyl content: 18 mol%, Tg: -56°C, Mw: 440,000, non-oil extended)

SBR2: HPR850 manufactured by JSR Corporation (S-SBR, styrene content: 26% by mass, vinyl content: 59 mol%, Tg: -25°C, Mw: 190,000, non-oil extended)

BR: UBEPOL BR (Registered Trademark) 150B manufactured by Ube Industries, Ltd. (vinyl bond amount: 1.5 mol%, cis 1,4-content: 97%, Mw: 440,000)

TPE1: DYNARON (Registered Trademark) manufactured by JSR Corporation (styrene-ethylene/butylene-styrene block copolymer (SEBS), styrene content: 53% by mass, content of alkylene unit: 47% by mass, Tg: - 50°C)

TPE2: SEPTON (Registered Trademark) manufactured by Kuraray Co., Ltd. (hydrogenated styrene-alkylene block copolymer (SEBS), styrene content: 32% by mass, content of alkylene unit: 68% by mass, Tg: -50°C)

Carbon black: DIABLACK N220 manufactured by Mitsubishi Chemical Corporation ($N_2SA$: 115 $m^2/g$)

Silica 1: 9100GR manufactured by Evonik Degussa GmbH ($N_2SA$: 235 $m^2/g$, CTAB: 200 $m^2/g$, average primary

particle size: 15.6 nm)

Silica 2: Ultrasil VN3 manufactured by Evonik Degussa GmbH ($N_2SA$: 175 $m^2/g$, CTAB: 165 $m^2/g$, average primary particle size: 15 nm)

Silane coupling agent: Si266 manufactured by Evonik Degussa GmbH (bis(3-triethoxysilylpropyl)disulfide)

Oil: VivaTec 400 manufactured by H&R Group (TDAE oil)

Resin component: Sylvatraxx (Registered Trademark) 4401 manufactured by Arizona Chemical Company, LLC (copolymer of α-methylstyrene and styrene, softening point: 85°C, Tg: 43°C)

Antioxidant 1: Nocrac 6C manufactured by Ouchi Shinko Chemical Industry Co., Ltd. (N-(1,3-dimethylbutyl)-N'-phenyl-p-phenylenediamine)

Antioxidant 2: Nocrac RD manufactured by Ouchi Shinko Chemical Industry Co., Ltd. (poly(2,2,4-trimethyl-1,2-dihydroquinoline))

Wax: OZOACE 0355 manufactured by Nippon Seiro Co., Ltd.

Stearic acid: Bead stearic acid "CAMELLIA" manufactured by NOF CORPORATION

Zinc oxide: Zinc oxide No. 1 manufactured by Mitsui Mining & Smelting Co., Ltd.

Sulfur: HK-200-5 manufactured by Hosoi Chemical Industry Co., Ltd. (5% oil-containing powdered sulfur)

Vulcanization accelerator 1: Nocceler CZ manufactured by Ouchi Shinko Chemical Industry Co., Ltd. (N-cyclohexyl-2-benzothiazolylsulfenamide (CBS))

Vulcanization accelerator 2: Sanceler TBZTD manufactured by Sanshin Chemical Industry Co., Ltd. (Tetrabenzyl Thiuram Disulfide (TBzTD))

(Examples and Comparative examples)

According to the compounding formulations shown in Tables 1 and 2, using a 1.7 L closed Banbury mixer, all chemicals other than sulfur and vulcanization accelerators are kneaded until a temperature reached a discharge temperature at 150°C to 160°C for 1 to 10 minutes to obtain a kneaded product. Next, using a twin-screw open roll, sulfur and vulcanization accelerators are added to the obtained kneaded product, and the mixture is kneaded for 4 minutes until the temperature reaches 105°C to obtain an unvulcanized rubber composition. The obtained unvulcanized rubber composition is molded into a shape of a tread part and attached together with other tire members such as a belt layer and the like, preparing an unvulcanized tire, followed by vulcanized at 170°C to obtain each test tire described in Tables 3 and 4 (size: 205/65R16 or 195/65R15).

<Measurement of tan δ at 0°C>

For each rubber test piece produced by being cut out with length 20 mm × width 4 mm × thickness 1 mm from inside of a rubber layer of a tread part of each test tire so that a tire circumferential direction is on a long side, using EPLEXOR series manufactured by gabo Systemtechnik GmbH, a tan δ at 0°C is measured under a condition of a temperature at 0°C, a frequency of 10 Hz, an initial strain of 10%, a dynamic strain of 2.5%, and an extension mode.

<Measurement of tan δ at 70°C>

For each rubber test piece produced by being cut out with length 20 mm × width 4 mm × thickness 1 mm from inside of a rubber layer of a tread part of each test tire so that a tire circumferential direction is on a long side, using EPLEXOR series manufactured by gabo Systemtechnik GmbH, a tan δ at 70°C is measured under a condition of a temperature at 70°C, a frequency of 10 Hz, an initial strain of 10%, a dynamic strain of 1%, and an extension mode.

<High-speed turning performance>

The obtained test tire is assembled on a standardized rim, filled with air, and then mounted to all wheels of a domestic FF vehicle (2000 cc). Sensory evaluation of turning performance is performed on a scale of 5 points when the vehicle is made run on a road surface at 100 km/h with the test tire being mounted thereto, in which the evaluation is performed by 20 drivers to calculate a total score of the evaluation results. From the obtained results, high-speed turning performance is indicated as an index with the result in Comparative example 3 being as 100, to obtain an evaluation result for each tire. The larger the index is, the more excellent the high-speed turning performance is.

(High-speed turning performance index) = (total score of evaluation for each tire)/(total score of Comparative example 5) × 100

<Fuel efficiency>

Using a rolling resistance tester, rolling resistance when the test tire is made run at a speed of 80 km/h is measured, and the inverse value is indicated as an index with Comparative example 6 being as 100. The results show that the larger the numerical value is, the smaller the rolling resistance is, and the more excellent the fuel efficiency is.

A sum of high-speed turning performance and fuel efficiency is defined as an overall performance index.

Table 1

| | Compounding | | | | | | | | | | | |
|---|---|---|---|---|---|---|---|---|---|---|---|---|
| | A | B | C | D | E | F | G | H | I | J | K | L |
| Compounding amount (part by mass) | | | | | | | | | | | | |
| NR | - | - | - | - | - | 30 | - | 20 | - | - | - | - |
| SBR1 | 80 | 80 | 80 | 80 | 50 | 50 | 80 | 80 | 80 | 80 | 80 | 80 |
| SBR2 | - | - | - | - | 30 | - | - | - | - | - | - | - |
| BR | 20 | 20 | 20 | 20 | 20 | 20 | 20 | - | 20 | 20 | 20 | 20 |
| TPE1 | 10 | 30 | - | 15 | 10 | 10 | 10 | 10 | 10 | 10 | 30 | - |
| TPE2 | - | - | 10 | 15 | - | - | - | - | - | - | - | 10 |
| Carbon black | 5 | 5 | 5 | 5 | 5 | 5 | 5 | 5 | 5 | 5 | 5 | 5 |
| Silica 1 | - | - | - | - | - | - | 60 | - | - | - | - | - |
| Silica 2 | 75 | 65 | 75 | 65 | 75 | 75 | - | 75 | 75 | 75 | 65 | 75 |
| Silane coupling agent | 6.0 | 5.2 | 6.0 | 5.2 | 6.0 | 6.0 | 6.0 | 6.0 | 6.0 | 6.0 | 5.2 | 6.0 |
| Oil | 20 | 20 | 20 | 20 | 20 | 20 | 20 | 20 | 20 | 20 | 20 | 20 |
| Resin component | 10 | 10 | 10 | 10 | 10 | 10 | 10 | 10 | 10 | 10 | 10 | 10 |
| Antioxidant 1 | 1.5 | 1.5 | 1.5 | 1.5 | 1.5 | 1.5 | 1.5 | 1.5 | 1.5 | 1.5 | 1.5 | 1.5 |
| Antioxidant 2 | 1.0 | 1.0 | 1.0 | 1.0 | 1.0 | 1.0 | 1.0 | 1.0 | 1.0 | 1.0 | 1.0 | 1.0 |
| Wax | 1.0 | 1.0 | 1.0 | 1.0 | 1.0 | 1.0 | 1.0 | 1.0 | 1.0 | 1.0 | 1.0 | 1.0 |
| Stearic acid | 1.5 | 1.5 | 1.5 | 1.5 | 1.5 | 1.5 | 1.5 | 1.5 | 1.5 | 1.5 | 1.5 | 1.5 |
| Zinc oxide | 2.5 | 2.5 | 2.5 | 2.5 | 2.5 | 2.5 | 2.5 | 2.5 | 2.5 | 2.5 | 2.5 | 2.5 |
| Sulfur | 1.5 | 1.5 | 1.5 | 1.5 | 1.5 | 1.5 | 1.5 | 1.5 | 1.5 | 1.5 | 1.5 | 1.5 |
| Vulcanization accelerator 1 | 2.0 | 2.0 | 2.0 | 2.0 | 2.0 | 2.0 | 2.0 | 2.0 | 2.0 | 2.0 | 2.0 | 2.0 |
| Vulcanization accelerator 2 | 2.0 | 2.0 | 2.0 | 2.0 | 2.0 | 2.0 | 2.0 | 2.0 | 2.0 | 2.0 | 2.0 | 2.0 |
| 0°C tan $\delta$ | 0.45 | 0.43 | 0.43 | 0.42 | 0.60 | 0.40 | 0.44 | 0.50 | 0.45 | 0.45 | 0.43 | 0.43 |
| 70°C tan $\delta$ | 0.15 | 0.17 | 0.14 | 0.16 | 0.15 | 0.13 | 0.13 | 0.17 | 0.15 | 0.15 | 0.17 | 0.14 |
| 70°C tan $\delta$/0°C tan $\delta$ | 0.33 | 0.40 | 0.33 | 0.38 | 0.25 | 0.33 | 0.30 | 0.34 | 0.33 | 0.33 | 0.40 | 0.33 |

Table 2

| | Compounding | | | | | | |
|---|---|---|---|---|---|---|---|
| | M | N | O | P | Q | R | S |
| Compounding amount (part by mass) | | | | | | | |
| NR | - | - | - | - | - | 40 | 60 |
| SBR1 | 80 | 80 | 80 | 80 | 80 | - | - |
| SBR2 | - | - | - | - | - | - | - |
| BR | 20 | 20 | 20 | 20 | 20 | 60 | 40 |
| TPE1 | 10 | - | - | - | 2 | 10 | - |
| TPE2 | - | - | - | - | - | - | - |
| Carbon black | 5 | 5 | 5 | 5 | 5 | 5 | 35 |
| Silica 1 | - | - | 70 | - | - | - | - |
| Silica 2 | 75 | 80 | - | 80 | 75 | 75 | - |

(continued)

| | Compounding | | | | | | |
|---|---|---|---|---|---|---|---|
| | M | N | O | P | Q | R | S |
| Compounding amount (part by mass) | | | | | | | |
| Silane coupling agent | 6.0 | 6.4 | 7.0 | 6.4 | 6.0 | 6.0 | - |
| Oil | 20 | 20 | 20 | 20 | 20 | 20 | 20 |
| Resin component | 10 | 10 | 10 | 10 | 10 | 10 | 10 |
| Antioxidant 1 | 1.5 | 1.5 | 1.5 | 1.5 | 1.5 | 1.5 | 1.5 |
| Antioxidant 2 | 1.0 | 1.0 | 1.0 | 1.0 | 1.0 | 1.0 | 1.0 |
| Wax | 1.0 | 1.0 | 1.0 | 1.0 | 1.0 | 1.0 | 1.0 |
| Stearic acid | 1.5 | 1.5 | 1.5 | 1.5 | 1.5 | 1.5 | 1.5 |
| Zinc oxide | 2.5 | 2.5 | 2.5 | 2.5 | 2.5 | 2.5 | 2.5 |
| Sulfur | 1.5 | 1.5 | 1.5 | 1.5 | 1.5 | 1.5 | 1.5 |
| Vulcanization accelerator 1 | 2.0 | 2.0 | 2.0 | 2.0 | 2.0 | 2.0 | 2.0 |
| Vulcanization accelerator 2 | 2.0 | 2.0 | 2.0 | 2.0 | 2.0 | 2.0 | 2.0 |
| 0°C tan $\delta$ | 0.45 | 0.46 | 0.47 | 0.46 | 0.44 | 0.28 | 0.29 |
| 70°C tan $\delta$ | 0.15 | 0.17 | 0.18 | 0.17 | 0.14 | 0.13 | 0.14 |
| 70°C tan $\delta$/0°C tan $\delta$ | 0.33 | 0.37 | 0.38 | 0.37 | 0.32 | 0.46 | 0.48 |

Table 3

| | Example | | | | | | |
|---|---|---|---|---|---|---|---|
| | 1* | 2* | 3* | 4* | 5* | 6* | 7* |
| Tread compounding | A | B | C | D | E | F | G |
| Base tread layer | - | - | - | - | - | - | - |
| Total content of TPE $\times$ (part) | 10 | 30 | 10 | 30 | 10 | 10 | 10 |
| X/Y | 13.9 | 41.7 | 13.9 | 41.7 | 13.9 | 13.9 | 13.9 |
| Tire | | | | | | | |
| Tire size | 205/55R16 | 205/55R16 | 205/55R16 | 205/55R16 | 205/55R16 | 205/55R16 | 205/55R16 |
| Cross-sectional width Wt (mm) | 205 | 205 | 205 | 205 | 205 | 205 | 205 |
| Belt layer width B (mm) | 163.6 | 163.6 | 163.6 | 163.6 | 163.6 | 163.6 | 163.6 |
| Outer diameter (mm) | 631.9 | 631.9 | 631.9 | 631.9 | 631.9 | 631.9 | 631.9 |
| Y=(B-16)/Wt | 0.72 | 0.72 | 0.72 | 0.72 | 0.72 | 0.72 | 0.72 |
| $(\pi/4) \times (Dt^2/Wt)$ | 1529 | 1529 | 1529 | 1529 | 1529 | 1529 | 1529 |
| Opening area of small hole (mm$^2$) | None | None | None | None | None | None | None |

(continued)

| Index | | | | | | | |
|---|---|---|---|---|---|---|---|
| High-speed turning performance | 116 | 114 | 120 | 118 | 112 | 112 | 118 |
| Fuel efficiency | 97 | 99 | 95 | 96 | 100 | 103 | 96 |
| Total performance | 213 | 213 | 215 | 214 | 212 | 215 | 214 |

* Examples 1 to 7 are not according to the invention.

| | Example | | | | | | |
|---|---|---|---|---|---|---|---|
| | 8* | 9* | 10* | 11* | 12* | 13 | 14* |
| Tread compounding | H | I | J | K | L | A | A |
| Base tread layer | - | - | - | - | - | S | - |
| Total content of TPE × (part) | 10 | 10 | 10 | 30 | 10 | 10 | 10 |
| X/Y | 13.9 | 15.4 | 13.9 | 41.7 | 13.9 | 13.9 | 13.9 |
| Tire | | | | | | | |
| Tire size | 205/55R16 | 205/55R16 | 195/55R15 | 195/55R15 | 195/55R15 | 205/55R16 | 205/55R16 |
| Cross-sectional width Wt (mm) | 205 | 205 | 195 | 195 | 195 | 205 | 205 |
| Belt layer width B (mm) | 163.6 | 149.3 | 156.4 | 156.4 | 156.4 | 163.6 | 163.6 |
| Outer diameter (mm) | 631.9 | 631.9 | 634.5 | 634.5 | 634.5 | 631.9 | 631.9 |
| Y=(B-16)/Wt | 0.72 | 0.65 | 0.72 | 0.72 | 0.72 | 0.72 | 0.72 |
| $(\pi/4) \times (Dt^2/Wt)$ | 1529 | 1529 | 1621 | 1621 | 1621 | 1529 | 1529 |
| Opening area of small hole (mm$^2$) | None | None | None | None | None | None | 2.0 |
| Index | | | | | | | |
| High-speed turning performance | 118 | 110 | 112 | 108 | 114 | 112 | 119 |
| Fuel efficiency | 98 | 101 | 100 | 102 | 97 | 102 | 96 |
| Total performance | 216 | 211 | 212 | 210 | 211 | 212 | 215 |

* Examples 8 to 12 and 14 are not according to the invention.

Table 4

| | Comparative example | | | | | |
|---|---|---|---|---|---|---|
| | 1 | 2 | 3 | 4 | 5 | 6 |
| Tread compounding | M | N | O | P | Q | R |
| Base tread layer | - | - | - | - | - | - |
| Total content of TPE $\times$ (part) | 10 | 0 | 0 | 0 | 2 | 10 |
| X/Y | 12.8 | 0 | 0 | 0 | 2.8 | 12.8 |
| Tire | | | | | | |
| Tire size | 205/55R16 | 205/55R16 | 205/55R16 | 205/55R16 | 205/55R16 | 205/55R16 |
| Cross-sectional width Wt (mm) | 205 | 205 | 205 | 205 | 205 | 205 |
| Belt layer width B (mm) | 175.9 | 163.6 | 163.6 | 175.9 | 163.6 | 175.9 |
| Outer diameter (mm) | 631.9 | 631.9 | 631.9 | 631.9 | 631.9 | 631.9 |
| Y=(B-16)/Wt | 0.78 | 0.72 | 0.72 | 0.78 | 0.72 | 0.78 |
| $(\pi/4) \times (Dt^2/Wt)$ | 1529 | 1529 | 1529 | 1529 | 1529 | 1529 |
| Opening area of small hole (mm$^2$) | None | None | None | None | None | None |
| Index | | | | | | |
| High-speed turning performance | 94 | 98 | 100 | 96 | 88 | 90 |
| Fuel efficiency | 90 | 91 | 89 | 88 | 90 | 100 |
| Total performance | 184 | 189 | 189 | 184 | 178 | 190 |

REFERENCE SIGNS LIST

Wt. Cross-sectional width
B. Belt layer width
Dt. Tire outer diameter
1. Circumferential groove
2. Land part
3. Belt layer
4. Cap rubber layer
6. Base rubber layer
7. Sidewall
8. Inner liner
9. Clinch
10. Tread surface
C. Tire circumferential direction
W. Tire width direction
Te. Tread end
21. Lateral groove
22. Sipe
23. Center sipe
24. Small hole
30. Bead
31. Bead core
32. Rim

**Claims**

1. A tire having a tread part and a belt layer (3),

   wherein a rubber composition of the tread part comprises a rubber component and a thermoplastic elastomer,
   wherein the rubber component comprises a multi-component copolymer having an aromatic vinyl unit and a conjugated diene unit,
   wherein the thermoplastic elastomer comprises a styrene-based thermoplastic elastomer having an alkylene unit,
   wherein, when Y is defined in the following equation with Wt, in mm, being a cross-sectional width of the tire and B, in mm, being a belt layer width of the tire under a condition that a tread of the tire in a standardized state is pressed against a flat surface by applying a standardized load,

$$Y=(B-16)/Wt,$$

   Y is 0.75 or less, and
   wherein a ratio (X/Y) of a total content X, in part(s) by mass, of the thermoplastic elastomer based on 100 parts by mass of the rubber component to Y is 3.0 or more,
   wherein the tread part comprises a base rubber layer (6) adjacent to an outer side of a belt layer (3) in a tire radial direction, the base rubber layer (6) being formed of a rubber composition comprising a rubber component which comprises at least one of an isoprene-based rubber and a butadiene rubber.

2. The tire of claim 1, wherein a glass transition temperature of the styrene-based thermoplastic elastomer having the alkylene unit is -30°C or lower.

3. The tire of claim 1 or 2, wherein a styrene content of the styrene-based thermoplastic elastomer having the alkylene unit is 20% by mass or more.

4. The tire of any one of claims 1 to 3, wherein X is 10 parts by mass or more.

5. The tire of any one of claims 1 to 4, wherein the rubber component comprises 50% by mass or more of the multi-component copolymer having an aromatic vinyl unit and a conjugated diene unit.

6. The tire of any one of claims 1 to 5, wherein the rubber composition further comprises silica having a $N_2SA$ of greater than 170 $m^2/g$ and less than 240 $m^2/g$ as measured by the BET method.

7. The tire of any one of claims 1 to 6, wherein the rubber composition further comprises silica having a CTAB of greater than 160 $m^2/g$ and less than 210 $m^2/g$.

8. The tire of any one of claims 1 to 7, wherein a ratio (70°C tan $\delta$/0°C tan $\delta$) of a tan $\delta$ at 70°C (70°C tan $\delta$) to a tan $\delta$ at 0°C (0°C tan $\delta$) of the rubber composition is 0.05 or more.

9. The tire of any one of claims 1 to 8, wherein the ratio (70°C tan $\delta$/0°C tan $\delta$) of the tan $\delta$ at 70°C (70°C tan $\delta$) to the tan $\delta$ at 0°C (0°C tan $\delta$) of the rubber composition is 1.80 or less.

10. The tire of any one of claims 1 to 9, wherein Y is less than 0.73.

11. The tire of any one of claims 1 to 10, wherein the rubber composition further comprises a resin component.

12. The tire of any one of claims 1 to 11, wherein the rubber component further comprises a butadiene rubber.

13. The tire of any one of claims 1 to 12, wherein, when a tire outer diameter is defined as Dt, in mm,
    Wt and Dt satisfy the following inequality (1):

$$(\pi/4) \times (Dt^2/Wt) \geqq 1500 \cdots (1)$$

14. The tire of any one of claims 1 to 13, wherein the tread part has land parts (2) partitioned by one or more circumferential grooves (1) extending continuously in a tire circumferential direction, at least one of the land parts (2) having one or more small holes (24) whose opening area to a tread surface (10) is 0.1 to 15 mm$^2$.

**Patentansprüche**

1. Reifen, der einen Laufstreifenteil und eine Gürtelschicht (3) aufweist,

   wobei eine Kautschukzusammensetzung des Laufstreifenteils eine Kautschukkomponente und ein thermoplastisches Elastomer umfasst,
   wobei die Kautschukkomponente ein Mehrkomponenten-Copolymer umfasst, das eine aromatische Vinyleinheit und eine konjugierte Dien-Einheit aufweist,
   wobei das thermoplastische Elastomer ein Styrol-basiertes thermoplastisches Elastomer umfasst, das eine Alkylen-Einheit aufweist,
   wobei, wenn Y in der folgenden Gleichung definiert ist, wobei Wt, in mm, eine Querschnittsbreite des Reifens ist und B, in mm, eine Gürtelschichtbreite des Reifens ist, unter einer Bedingung, dass ein Laufstreifen des Reifens in einem genormten Zustand durch Aufbringen einer genormten Last gegen eine ebene Oberfläche gedrückt wird,

$$Y=(B-16)/Wt,$$

   Y 0,75 oder weniger ist, und
   wobei ein Verhältnis (X/Y) eines Gesamtgehalts X, in Massenteil(en), des thermoplastischen Elastomers, bezogen auf 100 Massenteile der Kautschukkomponente, zu Y 3,0 oder mehr beträgt,
   wobei der Laufstreifenteil eine Basiskautschukschicht (6) umfasst, die zu einer äußeren Seite einer Gürtelschicht (3) in einer Reifenradialrichtung benachbart ist, wobei die Basiskautschukschicht (6) mit einer Kautschukzusammensetzung gebildet ist, welche eine Kautschuckomponente umfasst, die mindestens einen von einem Isopren-basierten Kautschuk und einem Butadienkautschuk umfasst.

2. Reifen nach Anspruch 1, wobei eine Glasübergangstemperatur des Styrol-basierten thermoplastischen Elastomers, das die Alkylen-Einheit aufweist, -30°C oder niedriger ist.

3. Reifen nach Anspruch 1 oder 2, wobei ein Styrolgehalt des Styrol-basierten thermoplastischen Elastomers, das die Alkylen-Einheit aufweist, 20 Massen-% oder mehr beträgt.

4. Reifen nach einem der Ansprüche 1 bis 3, wobei X 10 Massenteile oder mehr beträgt.

5. Reifen nach einem der Ansprüche 1 bis 4, wobei die Kautschukkomponente 50 Massen-% oder mehr des Mehrkomponenten-Copolymers umfasst, das eine aromatische Vinyleinheit und eine konjugierte Dien-Einheit aufweist.

6. Reifen nach einem der Ansprüche 1 bis 5, wobei die Kautschukzusammensetzung zudem Siliziumdioxid umfasst, das eine $N_2SA$ von mehr als 170 m$^2$/g und weniger als 240 m$^2$/g aufweist, gemessen durch das BET-Verfahren.

7. Reifen nach einem der Ansprüche 1 bis 6, wobei die Kautschukzusammensetzung zudem Siliziumdioxid umfasst, das eine CTAB von mehr als 160 m$^2$/g und weniger als 210 m$^2$/g aufweist.

8. Reifen nach einem der Ansprüche 1 bis 7, wobei ein Verhältnis (70°C tan $\delta$/0°C tan $\delta$) eines tan $\delta$ bei 70°C (70°C tan $\delta$) zu einem tan $\delta$ bei 0°C (0°C tan $\delta$) der Kautschukzusammensetzung 0,05 oder mehr beträgt.

9. Reifen nach einem der Ansprüche 1 bis 8, wobei das Verhältnis (70°C tan $\delta$/0°C tan $\delta$) des tan $\delta$ bei 70°C (70°C tan $\delta$) zu dem tan $\delta$ bei 0°C (0°C tan $\delta$) der Kautschukzusammensetzung 1,80 oder weniger beträgt.

10. Reifen nach einem der Ansprüche 1 bis 9, wobei Y weniger als 0,73 beträgt.

11. Reifen nach einem der Ansprüche 1 bis 10, wobei die Kautschukzusammensetzung zudem eine Harzkomponente umfasst.

12. Reifen nach einem der Ansprüche 1 bis 11, wobei die Kautschuckomponente zudem einen Butadienkautschuk umfasst.

13. Reifen nach einem der Ansprüche 1 bis 12, wobei, wenn ein Reifenaußendurchmesser als Dt, in mm, definiert ist, Wt und Dt der folgenden Ungleichung (1) genügen:

$$(\pi/4) \times (Dt^2/Wt) \geqq 1500 \cdots (1)$$

14. Reifen nach einem der Ansprüche 1 bis 13, wobei der Laufstreifenteil Positivprofilteile (2) aufweist, welche durch eine oder mehrere Umfangsrillen (1) unterteilt sind, die sich durchgehend in einer Reifenumfangsrichtung erstrecken, wobei mindestens einer der Positivprofilteile (2) ein oder mehrere kleine Löcher (24) aufweist, deren Öffnungsfläche zu einer Laufstreifenoberfläche (10) 0,1 bis 15 mm$^2$ beträgt.

**Revendications**

1. Pneumatique doté d'une partie de bande de roulement et d'une partie de ceinture (3),

dans lequel une composition en caoutchouc de la partie de bande de roulement comprend un composant en caoutchouc et un élastomère thermoplastique,
dans lequel le composant en caoutchouc comprend un copolymère multi-composants présentant une unité de vinyle aromatique et une unité de diène conjugué,
dans lequel l'élastomère thermoplastique comprend un élastomère thermoplastique basé sur du styrène présentant une unité alcylène,
dans lequel, lorsque Y est défini dans l'équation suivante avec Wt, en mm, qui représente une largeur en coupe transversale du pneumatique et B, en mm, étant une largeur de couche de ceinture à condition qu'une bande de roulement du pneu dans un état standardisé soit comprimée contre une surface plane en appliquant une charge standardisée,

$$Y=(B-16)/Wt,$$

Y est égal à 0,75 ou moins, et
dans lequel un rapport (X/Y) d'une teneur totale X, en partie(s) en masse, de l'élastomère thermoplastique basé sur 100 parties en masse du composant de caoutchouc à Y est de 3,0 ou plus,
dans lequel la partie de bande de roulement comprend une couche de caoutchouc de base (6) adjacente à un côté extérieur d'une couche de ceinture (3) dans une direction de la bande de roulement (3) dans une direction radiale du pneu, la couche de caoutchouc de base (6) étant formée d'une composition de caoutchouc comprenant un composant de caoutchouc qui comprend au moins un élément parmi un caoutchouc à base d'isoprène et un caoutchouc de butadiène.

2. Pneumatique selon la revendication 1, dans lequel une température de transition vitreuse de l'élastomère thermoplastique à base de styrène présentant l'unité alcylène est de -30 °C ou moins.

3. Pneumatique selon la revendication 1 ou 2, dans lequel une teneur en styrène de l'élastomère thermoplastique à base de styrène présentant l'unité alcylène est de 20 % en masse ou plus.

4. Pneumatique selon l'une quelconque des revendications 1 à 3, dans lequel X représente 10 parties en masse ou plus.

5. Pneumatique selon l'une quelconque des revendications 1 à 4, dans lequel le composant de caoutchouc comprend 50 % en masse ou plus du copolymère multi-composants doté d'une unité de vinyle aromatique et d'une unité de diène conjugué.

6. Pneumatique selon l'une quelconque des revendications 1 à 5, dans lequel la composition de caoutchouc comprend en outre de la silice présentant un $N_2SA$ supérieur à 170 m$^2$/g et inférieur à 240 m$^2$/g tel que mesuré par le procédé BET.

**7.** Pneumatique selon l'une quelconque des revendications 1 à 6, dans lequel la composition de caoutchouc comprend en outre de la silice présentant un CTAB supérieur à 160 m$^2$/g et inférieur à 210 m$^2$/g.

**8.** Pneumatique selon l'une quelconque des revendications 1 à 7, dans lequel un rapport (tan $\delta$ 70 °C/tan $\delta$ 0 °C) d'un tan $\delta$ à 70 °C (tan $\delta$ 70 °C) sur un tan $\delta$ à 0 °C (tan $\delta$ 0 °C) de la composition de caoutchouc est de 0,05 ou plus.

**9.** Pneumatique selon l'une quelconque des revendications 1 à 8, dans lequel le rapport (tan $\delta$ 70 °C/tan $\delta$ 0 °C) du tan $\delta$ à 70 °C (tan $\delta$ 70 °C) sur le tan $\delta$ à 0°C (tan $\delta$ 0 °C) de la composition de caoutchouc est de 1,80 ou moins.

**10.** Pneumatique selon l'une quelconque des revendications 1 à 9, dans lequel Y est inférieur à 0,73.

**11.** Pneumatique selon l'une quelconque des revendications 1 à 10, dans lequel la composition de caoutchouc comprend en outre un composant de résine.

**12.** Pneumatique selon l'une quelconque des revendications 1 à 11, dans lequel le composant de caoutchouc comprend en outre un caoutchouc de butadiène.

**13.** Pneumatique selon l'une quelconque des revendications 1 à 12, dans lequel, lorsqu'un diamètre extérieur du pneumatique est défini comme Dt, en mm,
Wt et Dt satisfont l'inégalité suivante (1) :

$$(\pi/4) \times (Dt^2/Wt) \geq 1500 \qquad (1)$$

**14.** Pneumatique selon l'une quelconque des revendications 1 à 13, dans lequel la partie de bande de roulement présente des parties d'appui (2) séparées par une ou plusieurs rainures circonférentielles (1) s'étendant en continu dans une direction circonférentielle du pneu, au moins une parties d'appui (2) présentant un ou plusieurs petits trous (24) dont la zone d'ouverture sur une surface de la bande de roulement (10) est de 0,1 à 15 mm$^2$.

## FIG. 1

# FIG. 2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2015079703 A
- EP 3915806 A1
- US 20120214933 A1
- US 2012318425 A1